# EUROPEAN PATENT APPLICATION

(11) **EP 4 316 614 A1**
(43) Date of publication of application: **07.02.2024**
(21) Application number: 21935021.2
(22) Date of filing: 01.04.2021
(51) Int. Cl.: A63B 71/06, G06T 7/00

(54) **SKILL RECOGNITION METHOD, SKILL RECOGNITION APPARATUS, AND GYMNASTICS SCORING SUPPORT SYSTEM**

(71) Applicant: FUJITSU LIMITED, Kawasaki-shi, Kanagawa 211-8588 (JP)
(72) Inventor: SATO, Takuya, Kawasaki-shi, Kanagawa 211-8588 (JP)
(74) Representative: Hoffmann Eitle
(86) International application number: PCT/JP2021/014248
(87) International publication number: WO 2022/208859

(57) **Abstract**

An element recognition method carried out by a computer, includes: obtaining skeletal frame information obtained as a result of performing skeletal frame detection; performing first-type element recognition in which, from among elements included in a gymnastic event, some elements are narrowed down based on the skeletal frame information; and performing second-type element recognition in which, according to a specialized algorithm that is specialized in recognizing the some elements narrowed down in the first-type element recognition, an element which was exhibited from among the some elements is recognized.

## Description

### Technical Field

The present invention relates to an element recognition method, an element recognition device, and a gymnastics scoring support system.

### Background Art

In a wide range of areas such as gymnastics or healthcare, the actions of a person such as a gymnast or a patient are automatically recognized using skeletal frame information of that person. For example, in artistic gymnastics, the present scoring system is based on the visual judgement made by a plurality of judges. However, with the advancement in the gymnastic apparatus and with the improvement in the training regimen, the elements have become more sophisticated in combination with an increased complexity in the movements. Hence, there have been cases in which the judges found it difficult to recognize the elements. Hence, in view of the fact that, regarding a gymnast, a different scoring result is produced from judge to judge, there are concerns about maintaining fairness and accuracy in the scoring.

In that regard, an automatic scoring technology has been in use in which three-dimensional skeletal frame information (hereinafter, sometimes written as "skeletal frame information") of a gymnast is used. For example, three-dimensional point cloud data of a gymnast is obtained using a 3D (Three-Dimensional) laser sensor, and the skeletal frame information of the gymnast is calculated using the three-dimensional point cloud data. Then, from the time-series data of the skeletal frame information, feature quantities indicating the features of the postures corresponding to "elements" are calculated and, based on the time-series data of the skeletal frame information and the feature quantities, each element exhibited by the gymnast is automatically recognized. Then, the automatic scoring result is provided to the judges so as to enhance the fairness and the accuracy of the scoring.

The score of a performance is calculated as the total of a D (Difficulty) score and an E (Execution) score. For example, the D score is calculated based on whether or not the elements were established. The E score is calculated in a point-deduction scoring manner according to the perfection levels of the elements. As far as the establishment of an element and the perfection level of an element is concerned, the judges make a visual judgement based on the rulebook in which the scoring rules are mentioned.

### Citation List

### Patent Literature

[Patent document 1] Japanese Laid-open Patent Publication No. 2020-89539
[Patent document 2] Japanese Laid-open Patent Publication No. 2020-38440

### Summary of invention

### Technical Problem

The feature quantities mentioned above include various feature quantities. For example, some feature quantities are common among a large number of events, such as the posture of the waist and the knees. Some feature quantities are specific to a particular event, such as the supporting position of the hands in the pommel horse event. Among such various feature quantities, some feature quantities can be easily obtained with accuracy, but some feature quantities are difficult to obtain with accuracy.

However, regarding a feature quantity that is difficult to obtain with accuracy, sometimes that feature quantity assumes significance in recognizing an element. In such a scenario, if the accuracy of calculation of the feature quantities is poor, then it becomes difficult to hold down false recognition of the elements.

As an aspect of the present invention, it is an object to provide an element recognition method, an element recognition device, and a gymnastics scoring support system that enable achieving enhancement in the accuracy of element recognition.

### Solution to Problem

An aspect of an element recognition method carried out by a computer, includes: obtaining skeletal frame information obtained as a result of performing skeletal frame detection; performing first-type element recognition in which, from among elements included in a gymnastic event, some elements are narrowed down based on the skeletal frame information; and performing second-type element recognition in which, according to a specialized algorithm that is specialized in recognizing the some elements narrowed down in the first-type element recognition, an element which was exhibited from among the some elements is recognized.

### Advantageous Effects of Invention

It becomes possible to achieve enhancement in the accuracy of element recognition.

### Brief Description of Drawings

FIG. 1 is a diagram illustrating an exemplary configuration of a gymnastics scoring support system.
FIG. 2 is a schematic diagram illustrating a skeletal frame recognition technology.
FIG. 3 is a schematic diagram illustrating an element recognition technology.
FIG. 4 is a block diagram illustrating an exemplary functional configuration of an element recognition device.
FIG. 5 is a diagram illustrating an example of a tentative-element dictionary data.
FIG. 6 is a schematic diagram illustrating an example of a handstand twist.
FIG. 7 is a diagram illustrating an example of rotation information.
FIG. 8 is a diagram illustrating an example of the rotation information.
FIG. 9 is a schematic diagram illustrating an example of "giant back swing" and "giant swing".
FIG. 10 is a diagram illustrating an example of element dictionary data.
FIG. 11 is a flowchart for explaining a sequence of an element recognition operation.
FIG. 12 is a diagram illustrating an example of a specialized algorithm of a first series.
FIG. 13 is a diagram illustrating an example of a specialized algorithm of a second series.

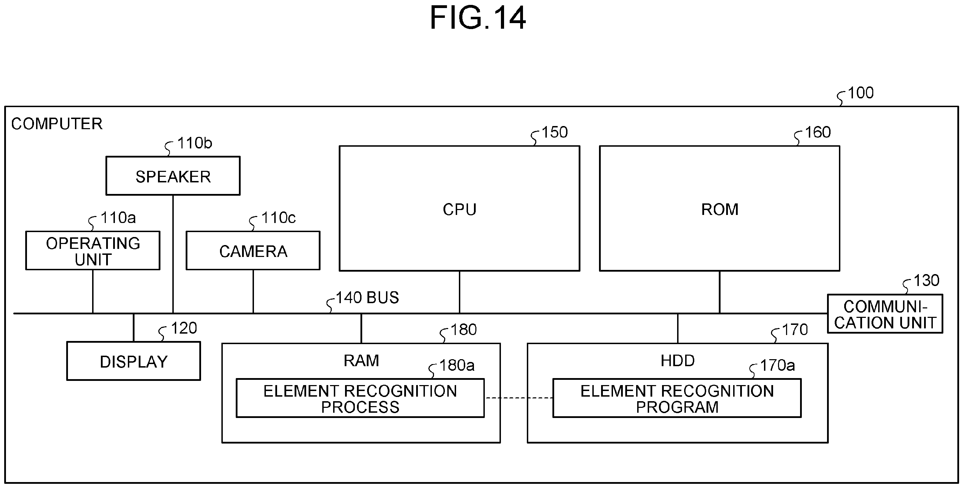

FIG. 14 is a diagram illustrating an exemplary hardware configuration.

### Embodiments for Carrying Out the Invention

Exemplary embodiments of an element recognition method, an element recognition device, and a gymnastics scoring support system are described below with reference to the accompanying drawings. Each embodiment is only exemplary in presenting an example or an aspect, and the range of numerical values or functions and the usage scenes are not limited by such presentation. Moreover, the embodiments can be appropriately combined with each other without causing any contradiction in the operation details.

### <System configuration>

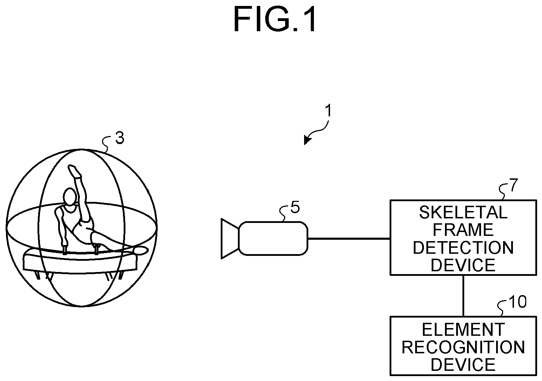

FIG. 1 is a diagram illustrating an exemplary configuration of a gymnastics scoring support system. A gymnastics scoring support system 1 illustrated in FIG. 1 performs imaging of three-dimensional data of a performer 3 who represents the photographic subject; recognizes the skeletal frame of the performer 3; and produces accurate scores for the elements.

As illustrated in FIG. 1, the gymnastics scoring support system 1 includes a 3D laser sensor 5, a skeletal frame detection device 7, and an element recognition device 10.

The 3D laser sensor 5 represents an example of a sensor device that uses an infrared laser and, at each pixel corresponding to a scanning point, measures the distance to the object, that is, measures the depth. As an example of the 3D laser sensor 5, it is possible to use a depth-imaging camera or a laser sensor in which the LADAR (Light Detection and Ranging) technology is implemented. For example, it is possible to use a MEMS (Micro-Electro-Mechanical Systems) mirror laser sensor.

The skeletal frame detection device 7 represents an example of a computer that provides a skeletal frame detection function which uses a depth image measured by the 3D laser sensor 5 and detects skeletal frame information indicating the skeletal body parts such as the positions of the joints. Meanwhile, the skeletal frame detection is also called skeletal frame recognition or skeletal frame estimation.

The 3D laser sensor 5 and the skeletal frame detection device 7 implement 3D sensing for performing marker-less three-dimensional measurement of the movements of the performer 3.

The element recognition device 10 represents an example of a computer that provides an element recognition function which uses time-series data of the skeletal frame information obtained when the skeletal frame detection device 7 performs the skeletal frame detection; and which recognizes the elements exhibited by the performer 3. In the element recognition function, an automatic scoring function can also be packaged so as to enable calculation of the elements exhibited by the performer and calculation of the score of the performance, such as the D score and the E score, based on the element recognition result regarding the performer 3.

Herein, only as an example, the explanation is given about the case in which the element recognition result is used in automatic scoring. However, that is not the only possible method of using the element recognition result. For example, the skeletal frame information and the element recognition result can be output to an application meant for supporting the scoring (hereinafter, written as a "scoring support application"). The scoring support application enables displaying views such as: a multiangle view in which the frame-by-frame joint angles during the performance of the performer 3 can be displayed from a plurality of viewpoints such as the front view, the lateral view, and the planar view; and an element recognition view in which the names of the elements obtained as the element recognition result are displayed. Apart from using it in the scoring support application, the element recognition result can be used also in various usage scenes such as a training application or broadcasting/entertainment contents. Such backend functions and services need not always be packaged with the element recognition function, and can obviously be provided in a different device than the element recognition device 10, or in an information system, or as a cloud service.

### <Skeletal frame recognition>

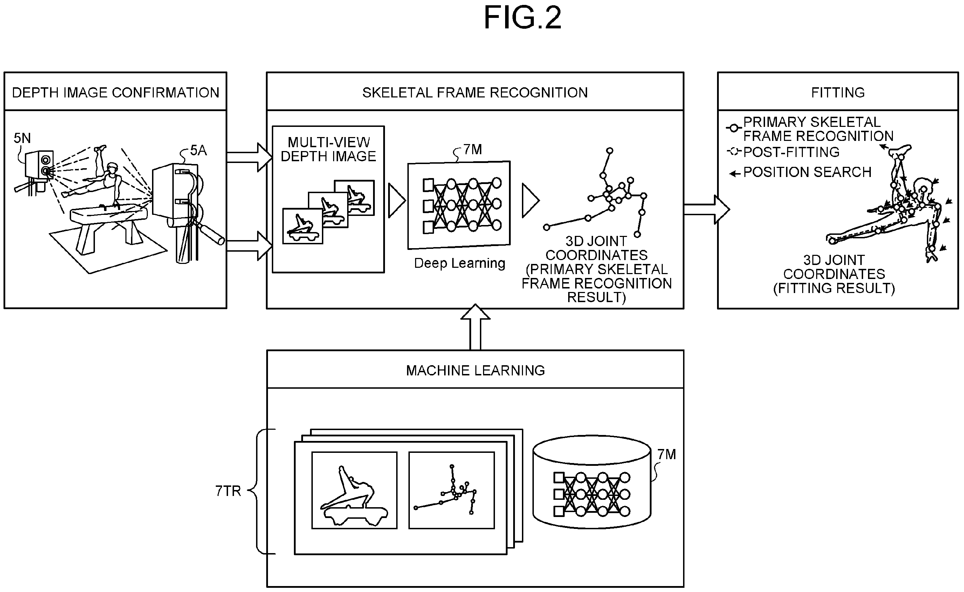

FIG. 2 is a schematic diagram illustrating a skeletal frame recognition technology. As illustrated in FIG. 2, only as an example, the skeletal frame recognition function can be implemented according to a hybrid method in which skeletal frame recognition based on a machine learning model is combined with fitting.

For example, a machine learning model 7m, such as a neural network of the CNN (Convolutional Neural Network) type, that treats depth images as the input and outputs estimated values of 3D skeletal frame coordinates can be used for skeletal frame recognition. In the training of the machine learning model 7m, it is possible to use a dataset 7TR that contains sets of training data in which depth images are associated to the 3D skeletal frame coordinates of correct solution labels. For example, a set of training data can be prepared by generating depth images from the 3D skeletal frame coordinates of a gymnastic event using computer graphics. With such a data set, in the training phase, depth images are treated as the explanatory variables of the machine learning model 7m; labels are treated as the objective variables of the machine learning model 7m; and the machine learning model 7m can be trained according to, for example, deep learning. As a result, an already-trained machine learning model 7M is obtained. In the inference phase, to the machine learning model 7M are input multi-view depth images that are output from multi-view 3D laser sensors 5A to 5B installed to overcome the occlusion attributed to a gymnastic apparatus or the performer 3. Having the multi-view depth images input thereto, the machine learning model 7M outputs 3D the skeletal frame coordinates of the performer 3.

During fitting, the output of the 3D skeletal frame information of the machine learning model 7M and the fitting result in the previous frame are treated as the initial values, and a human model is applied to a 3D point cloud having multi-view depth images integrated therein. For example, an evaluation function (likelihood) is defined to indicate the degree of coincidence between the coordinates of the 3D point cloud and the surface coordinates of the human model; the joint angle having the highest likelihood is obtained by optimization; and the 3D skeletal frame coordinates are decided.

### <Automatic scoring based on element recognition>

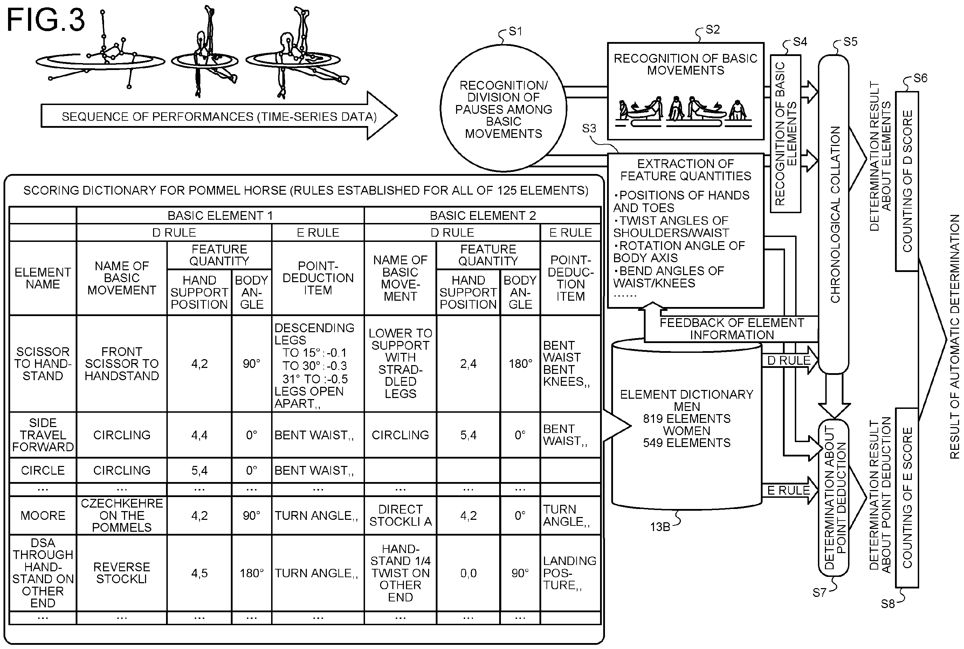

FIG. 3 is a schematic diagram illustrating an element recognition technology. In FIG. 3 is illustrated an example of element recognition of the pommel horse event as an exemplary gymnastic event. As illustrated in FIG. 3, at each pause between basic movements as recognized from the time-series data of the 3D skeletal frame coordinates, the element recognition function divides the time-series data of the 3D skeletal frame coordinates (S1). Herein, an "basic movement" implies a fundamental movement that is common to the elements constituting a performance. For example, as illustrated in element dictionary data 13B, one or more basic movements for each element can be registered in a corresponding manner.

Regarding each set of time-series data of the 3D skeletal frame coordinates that is obtained by division as explained above, the basic movements included in that set of time-series data are identified and feature quantities, such as the positions of the hands and the toes and the twist angles of the shoulders and the waist, are extracted (S2 and S3).

Then, based on the basic movements identified at Step S2 and the feature quantities extracted at Step S3, the basic elements are recognized (S4). Subsequently, the time-series pattern of the basic elements that is obtained as the recognition result at Step S4 is collated with the time-series pattern registered in the element dictionary data 13B, and the elements that are actually exhibited by the performer 3 are determined (S5). For example, in the example illustrated in FIG. 3, "front scissor to handstand" is recognized as the first basic movement and "lower to support with straddled legs" is recognized as the second basic movement, and hence "scissor to handstand" is determined to be the exhibited element.

Then, according to the scoring rules, the value points and the execution points of the element determined at Step S5 are counted, and the D score and the E score are calculated (S6 and S8). Meanwhile, before calculating the E score at Step S8, for each element determined at Step S5, it is determined whether or not the feature quantities extracted during the exhibition of that element correspond to the point-deduction items defined in the scoring rules (S7). If the feature quantities correspond to the point-deduction items, then the executional deduction points are deducted from the execution points of the element at Step S8.

Due to such element recognition, the implementation of automatic scoring for five events, namely, rings, pommel horse, horse vault for men and women, and balance beam is increasingly becoming possible.

### <Aspect of problems>

However, in order to expand the scope of the abovementioned element recognition to more than five gymnastic events, sometimes the variability in the accuracy of calculating the feature quantities becomes a barrier.

That is, the feature quantities mentioned above include various feature quantities. For example, some feature quantities are common among a large number of events, such as the posture of the waist and the knees. Some feature quantities are specific to a particular event, such as the supporting position of the hands in the pommel horse event. Among such various feature quantities, some feature quantities can be easily obtained with accuracy, but some feature quantities are difficult to obtain with accuracy. Moreover, in artistic gymnastics, various movements are involved in a single gymnastic event, and it is difficult to calculate the feature quantities according to an across-the-board method.

However, regarding a feature quantity that is difficult to obtain with accuracy, sometimes that feature quantity assumes significance in recognizing an element. In such a scenario, if the accuracy of calculation of the feature quantities is poor, then it becomes difficult to hold down false recognition of the elements.

Only as an example, the explanation is given about the case of expanding the scope of the element recognition to events such as the horizontal bar event and the uneven parallel bars event. In the case of the horizontal bar event or the uneven parallel bars event, the handgrip of the performer 3 on the horizontal bar or the uneven parallel bars can be calculated as a feature quantity. However, since the evaluation (score) of an element changes according to the handgrip, the accuracy of calculating the handgrip significantly affects the accuracy of element recognition or automatic scoring.

For example, the handgrip in the horizontal bar event or the uneven parallel bars event can include the overhand grip, the underhand grip, and the el-grip. The underhand grip indicates an outward twist of 180° from the overhand grip. The el-grip indicates an inward twist of 180° from the overhand grip. Thus, the underhand grip and the el-grip have opposite directions of torsion of the arms. However, since the torsion of the arms is difficult to observe from an image, there are times when even an expert person such as a judge finds it difficult to differentiate between the handgrips from an image in which the handgrip is clearly captured.

Examples of the approaches to differentiate between such handgrips include: a reference technology 1 in which the joint positions of the fingers are obtained; and a reference technology 2 in which the rotation information of the arms is obtained. Herein, the reference technology 1 and the reference technology 2 are distinguished from the known conventional technology.

For example, in the reference technology 1, 3D skeletal coordinates are obtained that not only include the major joints such as the head, the shoulder, the spine, the elbows, the wrists, the waist, the knees, and the ankles, but also include the joint positions of the fingers. However, the fingers are smaller as compared to the other skeletal parts. Hence, in a depth image, the fingers are observed to be smaller and more minute than the other skeletal parts. Moreover, the fingers are captured while being in contact with a bar. Hence, even in a multi-view depth time, there are times when occlusion occurs easily. In that regard, in the reference technology 1, obtaining the correct joint positions of the fingers itself is a difficult task. In addition, for example, even if the correct joint positions of the fingers are obtained, the difference between the joint positions of the fingers during the underhand grip and the el-grip is not easily evident. Hence, it remains difficult to differentiate between the underhand grip and the el-grip.

In the reference technology 2, the rotation information of the arm bones is obtained. However, the variation occurring in the depth images accompanying the rotation of the arms is smaller than the variation occurring in the depth images accompanying the variation in the joint positions. Hence, depending on the degree of bend of the arms, there occurs variability in the accuracy of calculating the rotation information. For example, when the arms are in the extended state, there is a decline in the accuracy of calculating the rotation information as compared to the case in which the arms are bent. Hence, it becomes difficult to obtain highly accurate rotation information. In that case, it still be difficult to distinguish the handgrip, thereby leading to a decline in the accuracy of element recognition and automatic scoring.

### <Aspect of approach to resolve problem>

In that regard, in the element recognition function according to the first embodiment, based on the skeletal frame information obtained as a result of performing skeletal frame detection, elements are narrowed down from among the elements included in the concerned gymnastic event; a specialized algorithm is selected that is specialized in recognizing the narrowed-down elements; and which element of the selected elements was exhibited is recognized. That is, instead of using an element recognition algorithm that caters to all elements included in an element dictionary, the problem is resolved by implementing a specialized algorithm that is specialized in recognizing only some of the elements.

Only as an example, consider the case of the horizontal bar event as the gymnastic event. For example, consider a case in which, according to the time-series data of the 3D skeletal frame coordinates of the performer 3 and according to other feature quantities other than the handgrip of the performer 3 that is calculated from the time-series data, basic movements are recognized in the order of a basic movement 1 indicating "swing forward to handstand" and a basic movement 2 indicating "full twisting". In that case, from among all elements included in the gymnastic event "horizontal bar", it is possible to narrow down to two elements, namely, "forward giant 360 to mixed grip" and "forward giant 360 to el-grip". Since the two elements have different levels of difficulty, the values points added at the time of counting the D score also differ from each other.

As illustrated in FIG. 3, the information about the two elements mentioned above gets fed back to the calculation of the feature quantities; so that, as a specialized algorithm that is specialized in recognizing the two elements mentioned above, it becomes possible to implement an algorithm for calculating the feature quantities of the handgrip, which is the determining factor in differentiating between those two elements. As an aspect, such an algorithm can be built based on the composition of the performance or based on a logic established under the constraint conditions such as the rules. That is, under a constraint condition indicating "until the non-axis hand during a handstand twist grasps the bar", there is a heuristic that the concerned elbow is more likely to be bent than be extended. For that reason, under the abovementioned constraint condition, a logic is established that the rotation information of the arm as used in the fitting when the elbow is bent has a higher degree of reliability as compared to the degree of reliability of the rotation information of the arm as used in the fitting when the elbow is extended. Based on such logic, an algorithm is implemented in which the time-series data of the skeletal frame information of the performer 3 as well as the rotation information of the time when the arm is bent is used as the supplementary information at the time of calculating the feature quantities of the handgrip. As a result of implementing such an algorithm, the feature quantities of the handgrip can be calculated with a higher degree of accuracy as compared to the case of calculating the feature quantities of the handgrip from the time-series data of the skeletal frame information of the performer 3. As a result, element recognition is performed using highly accurate feature quantities.

Thus, according to the element recognition function according to the first embodiment, it becomes possible to enhance the accuracy of element recognition. In turn, it also becomes possible to enhance the accuracy of the backend functions or services such as automatic scoring, scoring support, training, and entertainment contents.

### <Configuration of element recognition device 10>

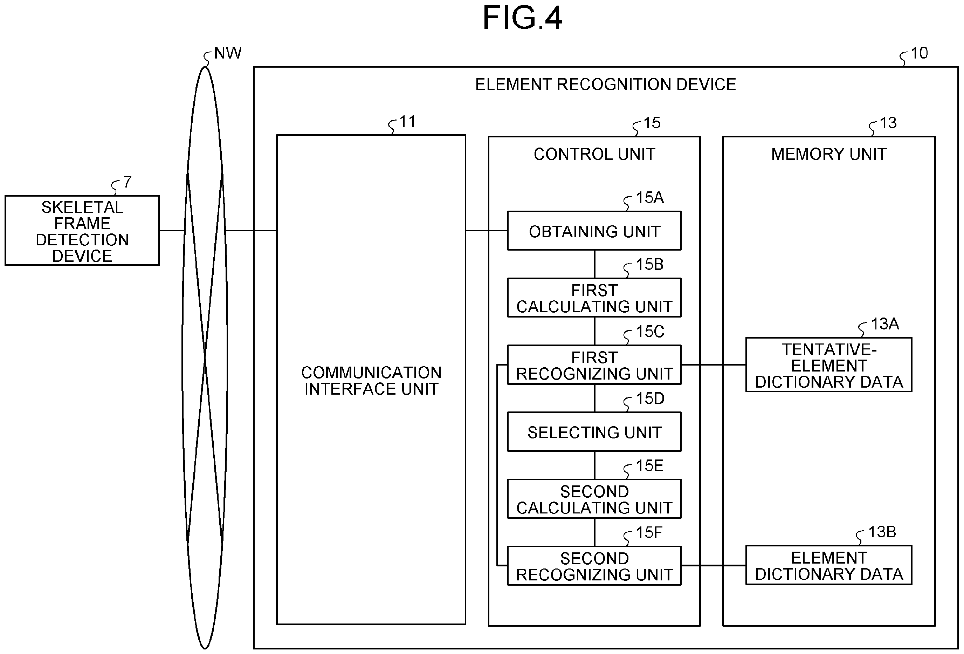

FIG. 4 is a block diagram illustrating an exemplary functional configuration of the element recognition device 10. In FIG. 4 are illustrated schematic blocks that correspond to the element recognition function of the element recognition device 10. As illustrated in FIG. 4, the element recognition device 10 includes a communication interface unit 11, a memory unit 13, and a control unit 15. Meanwhile, in FIG. 1, the function units related only to the element recognition function are extracted and illustrated. That is, the skeletal frame detection function, the automatic scoring function, and the default functions and the optional functions of an existing computer can also be provided in the element recognition device 10.

The communication interface unit 11 represents an example of a communication control unit that performs communication control with respect to other devices such as the skeletal frame detection device 7. Only as an example, the communication interface unit 11 can be implemented using a network interface card such as a LAN (Local Area Network) card. As an aspect, the communication interface unit 11 receives 3D skeletal frame coordinates from the skeletal frame detection device 7 or receives skeletal frame information containing post-fitting 3D skeletal frame coordinates; and outputs the element recognition result or the automatic scoring result to an external device (not illustrated).

The memory unit 13 represents a function unit used to store a variety of data. Only as an example, the memory unit 13 is implemented using a storage such as an internal storage, an external storage, or an auxiliary storage. For example, the memory unit 13 is used to store tentative-element dictionary data 13A and the element dictionary data 13B. Other than storing the tentative-element dictionary data 13A and the element dictionary data 13B, the memory unit 13 can also be used to store a variety of data such as the element recognition result and the automatic scoring result. Regarding the tentative-element dictionary data 13A and the element dictionary data 13B, the explanation is given later along with the explanation of the operations in which the dictionary data is referred to or generated.

The control unit 15 is a processing unit that performs overall control of the element recognition device 10. For example, the control unit 15 is implemented using a hardware processor. As illustrated in FIG. 1, the control unit 15 includes an obtaining unit 15A, a first calculating unit 15B, a first recognizing unit 15C, a selecting unit 15D, a second calculating unit 15E, and a second recognizing unit 15F. Meanwhile, in FIG. 1, the functions corresponding only to the element recognition function are extracted and illustrated. However, the skeletal frame detection function can also be included; and the backend functions such as automatic scoring, scoring support, training, and entertainment contents can also be included.

The obtaining unit 15A is a processing unit that obtains skeletal frame information. Only as an example, the obtaining unit 15A can obtain the time-series data of the skeletal frame information from the skeletal frame detection device 7. Herein, the obtaining unit 15A can obtain the skeletal frame information from an arbitrary information source; and the manner of obtaining the information is not limited to communication via a network NW. For example, the obtaining unit 15A can obtain the skeletal frame information from the storage included in the element recognition device 10, or from a removable media that is detachably-attachable to the element recognition device 10, such as a memory card or a USB (Universal Serial Bus) memory.

The first calculating unit 15B is a processing unit that calculates first-type feature quantities to be used in first-type element recognition meant for narrowing down the elements of a gymnastics event. Only as an example, the first calculating unit 15B calculates the first-type feature quantities from the time-series data of the skeletal frame information. At that time, the first calculating unit 15B either can calculate all items defined in the element dictionary data 13B, such as the feature quantities related to the items illustrated in FIG. 3, or can narrow down the items and calculate the first-type feature quantities of those narrowed-down items.

The "first-type feature quantities" imply the feature quantities that, from among all elements of a gymnastic event, enable narrowing down some elements, that is, narrowing down one or more elements. Thus, the first-type feature quantities need not always include the feature quantities related to all items. Examples of such first-type feature quantities include the feature quantities that are easy to obtain with accuracy from among the feature quantities defined in the element dictionary data 13B. For example, the feature quantities for which the calculation accuracy is equal to or greater than a first threshold value can be used as the first-type feature quantities. As an additional weighting condition, the feature quantities having a stable accuracy, such as the feature quantities for which the variability in the calculation accuracy, for example, the dispersion in the calculation accuracy is smaller than the threshold value, can be used as the first-type feature quantities.

The first recognizing unit 15C is a processing unit that performs first-type element recognition. Only as an example, the element recognition technology disclosed in International Publication Pamphlet No. WO 2019/116495 can be used in performing the first-type element recognition.

As an illustrative embodiment, the first recognizing unit 15C can perform the first-type element recognition using the time-series data of the skeletal frame information and using the first-type feature quantities calculated by the first calculating unit 15B. More specifically, at each pause between basic movements as recognized from the time-series data of the 3D skeletal frame coordinates, the first recognizing unit 15C divides the time-series data of the 3D skeletal frame coordinates. Then, the first recognizing unit 15C identifies the basic movement included in each set of partial time-series data obtained by division. Then, based on the identified basic movement and based on the first-type feature quantities calculated by the first calculating unit 15B, the first recognizing unit 15C recognizes the basic elements. Subsequently, the first recognizing unit 15C collates the time-series pattern of the basic elements obtained as the recognition result with the time-series pattern registered in the tentative-element dictionary data 13A, and narrows down the candidate elements exhibited by the performer 3 from among all elements of the gymnastic event. In the following explanation, the elements that are tentatively narrowed-down as a result of performing the first-type element recognition are sometimes referred to as "tentative elements" so as to differentiate them from the elements in the actual performance that are uniquely identified as a result of performing second-type element recognition (explained later).

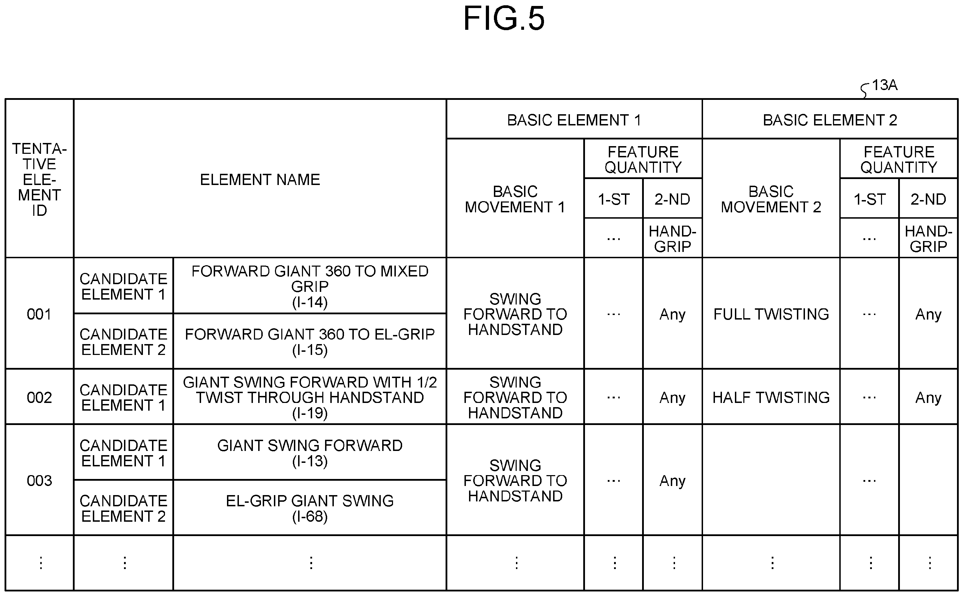

FIG. 5 is a diagram illustrating an example of the tentative-element dictionary data 13A. In FIG. 5, only as an example, the tentative-element dictionary data 13A related to the gymnastic event "horizontal bar" is illustrated. As illustrated in FIG. 5, in the tentative-element dictionary data 13A, for each tentative element, it is possible to use data in which a set of candidate elements and the time-series patterns of the basic elements are held in a corresponding manner. Each basic element can include the items such as the basic movement and the feature quantity. Herein, only as an aspect, the tentative-element dictionary data 13A is used in narrowing down the tentative elements. Hence, the tentative-element dictionary data 13A need not always contain second-type feature quantities that are used in the second-type element recognition for uniquely identifying the elements in the actual performance from among the tentative elements.

Given below is the explanation about an example in which the time-series pattern of the basic elements defined in the tentative-element dictionary data 13A is collated with the time-series pattern of the basic elements recognized to have the basic movement 1 indicating "swing forward to handstand" and the basic movement 2 indicating "full twisting" in that order using the first-type feature quantities calculated by the first calculating unit 15B. In that case, the tentative elements are narrowed down to two tentative elements identified by a tentative element ID "001", that is, a candidate element 1 indicating "forward giant 360 to mixed grip" and a candidate element 2 indicating "forward giant 360 to el-grip". That is, regarding a second-type feature quantity "handgrip" that is the determining factor in differentiating between two elements, when the collation condition is relaxed to "ANY", then the narrowing-down function is implemented in place of the identification function.

Given below is the explanation about an example in which the tentative-element dictionary data 13A is collated with the time-series pattern of the basic elements recognized to have a basic movement indicating "swing forward to handstand" and a basic movement indicating "half twisting" in that order using the first-type feature quantities calculated by the first calculating unit 15B. In that case, the tentative element is narrowed down to a tentative element identified by a tentative element ID "002", that is, a candidate element 1 indicating "giant swing forward with 1/2 twist through handstand". Since the element "giant swing forward with 1/2 twist through handstand" is an element without regard to the handgrip, the candidate element gets narrowed to only one even before the implementation of the second-type element recognition.

Given below is the explanation about an example in which the tentative-element dictionary data 13A is collated with the time-series pattern of the basic element recognized to have only one basic movement indicating "swing forward to handstand" using the first-type feature quantities calculated by the first calculating unit 15B. In that case, the tentative elements are narrowed down to two tentative elements identified by a tentative element ID "003", that is, a candidate element 1 indicating "giant swing forward" and a candidate element 2 indicating "el-grip giant swing". That is, regarding a second-type feature quantity "handgrip" that is the determining factor in differentiating between the two elements, namely, the candidate element 1 indicating "giant swing forward" and the candidate element 2 indicating "el-grip giant swing"; when the collation condition is relaxed to "ANY", the narrowing-down function is implemented in place of the identification function.

The selecting unit 15D is a processing unit that selects a specialized algorithm that is specialized in recognizing the elements narrowed down by the first recognizing unit 15C. Only as an example, when the tentative-element recognition result is obtained by the first recognizing unit 15C, the selecting unit 15D can call a specialized algorithm, which is meant to be implemented for the candidate elements narrowed down as the tentative elements in the tentative-element recognition result, according to the function names associated to the tentative elements. For example, in the tentative-element dictionary data 13A, the function names are further registered in a corresponding manner to the tentative element IDs, so that it becomes possible to call the specialized algorithms. Alternatively, in addition to using the tentative-element dictionary data 13A, a separate database such as a lookup table can be used in which the tentative elements and the function names are defined in a corresponding manner.

The second calculating unit 15E is a processing unit that calculates the second-type feature quantities. As an aspect, the second calculating unit 15E follows the specialized algorithm selected by the selecting unit 15D, and calculates second-type feature quantities that are the determining factors in differentiating the actually-exhibited elements from among the candidate elements narrowed down by performing the first-type element recognition. Such a specialized algorithm can be built based on the composition of the performance or a logic established under the constraint conditions such as the rules.

As an example of the specialized algorithm, given below is the explanation about an example of calculating a second-type feature quantity "handgrip" that is the determining factor in differentiating among the candidate elements of a first series having different levels of difficulty depending on the handgrip following the twisting in a handstand twist. Only as an exemplary combination of such candidate elements, the candidate element 1 indicating "forward giant 360 to mixed grip" and the candidate element 2 indicating "forward giant 360 to el-grip", which are included in the tentative elements identified by the tentative element ID "001" illustrated in FIG. 5, can be cited. However, that is not the only possible case, and a large number of combinations of candidate elements including following combinations (1) to (3) are available in the first series.
(1) "giant swing backward with hop 3/2 turn to mixed grip" and "giant swing backward with hop 3/2 turn to el-grip"
(2) "Stalder roll to handstand" and "Stalder roll to el-grip"
(3) "Stalder with hop 3/2 turn through handstand in mixed grip" and "Stalder with hop 3/2 turn through handstand in el-grip"

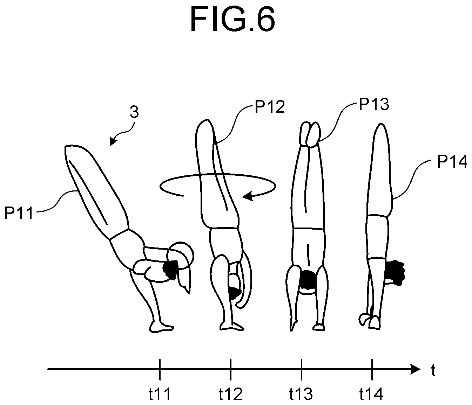

FIG. 6 is a schematic diagram illustrating an example of a handstand twist. In FIG. 6, the flow of time t is illustrated to be in the direction of an arrow; and postures P11 to P14 of the performer 3 at timings t11 to t14, respectively, are illustrated in a schematic manner. As illustrated in FIG. 6, at the timing t11, the left hand of the performer 3 is treated as the axis hand and the right hand that is the non-axis hand is moving to the handstand posture while being separated from the bar. Then, at the timings t12 to t14, full twisting is carried out in the state in which the performer 3 is on the handstand with the left hand functioning as the axis hand. Herein, according to the left elbow joint at the timing t11, under the constraint condition indicating the period of time until the bar is grasped by the right hand that is the non-axis hand at the time of moving to the handstand twist, there is a clear heuristic of having a greater possibility of the right elbow being bent than being extended. Consequently, in the candidate elements belonging to the first series, under the constraint condition mentioned above, a logic can be established that the degree of reliability of the rotation information of an arm as used in the fitting when the elbow is bent is higher than the degree of reliability of the rotation information of an arm as used in the fitting when the elbow is extended. Based on such logic, as supplementary information at the time of calculating the second-type feature quantities, a specialized algorithm is built in which the time-series data of the skeletal frame information of the performer 3 is used along with using the rotation information in the case in which the elbow is bent.

More specifically, firstly, the second calculating unit 15E identifies the axis hand of the performer 3. For example, the hand for which the distance between the joint position of the wrist and the position of the horizontal bar is shorter can be estimated to be the "axis hand". Then, based on the feature quantities of specific types from among the first-type feature quantities recognized to represent the basic movement "full twisting" in the first-type element recognition, for example, based on the direction of rotation of the body and the amount of rotation; the handgrip of the axis hand of the performer 3 is estimated. At that time, if the "el-grip" represents the handgrip of the axis hand of the performer 3, then the second calculating unit 15E performs the following operations. That is, based on the rotation information of the arm used in the fitting during the skeletal frame detection of the section in which the distance between the wrist of the non-axis hand of the performer 3 and the horizontal bar is equal to or greater than a threshold value, the second calculating unit 15E estimates the handgrip of the non-axis hand of the performer 3. If the "el-grip" represents the handgrip of the non-axis hand, then the second calculating unit 15E calculates "el-grip" to be the handgrip for the second-type feature quantities. On the other hand, if the el-grip does not represent the handgrip of the non-axis hand, then the second calculating unit 15E calculates "other than el-grip" to be the handgrip for the second-type feature quantities.

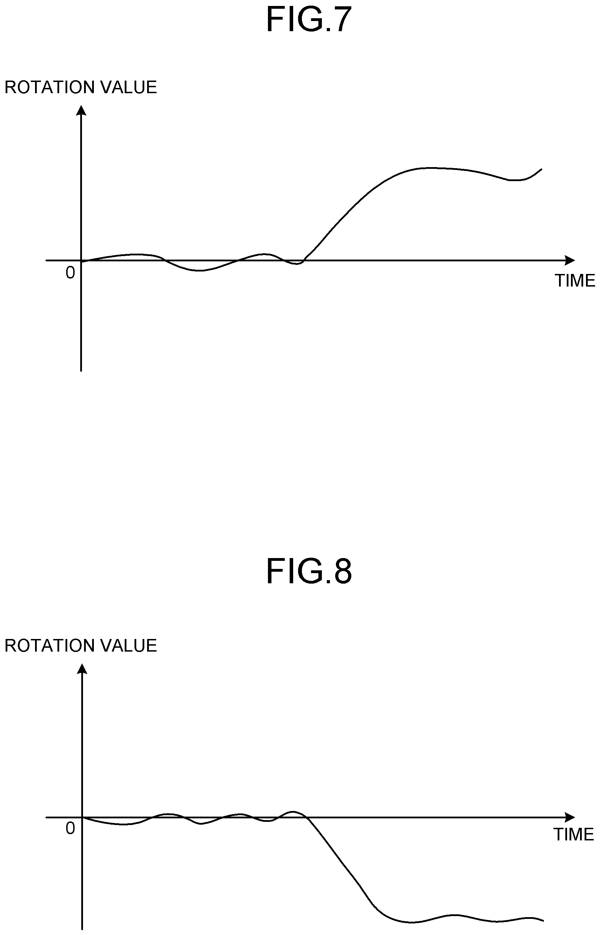

FIGS. 7 and 8 are diagrams illustrating examples of the rotation information. In FIGS. 7 and 8, only as examples of the rotation information, the rotation values of the upper arm and the forearm of the right hand, which is the non-axis hand of the performer 3 exhibiting a handstand twist, are illustrated. For example, the time waveform of the total value of the rotation angle is illustrated. In FIG. 7 is illustrated an example in which the performer 3 grasps the bar with the right hand using the underhand grip; and in FIG. 8 is illustrated an example in which the performer 3 grasps the bar with the right hand using the el-grip. Moreover, in FIGS. 7 and 8, the vertical axis of the graph represents the rotation value, and the horizontal axis of the graph represents the time.

As illustrated in FIGS. 7 and 8, in the underhand grip and the el-grip, since the directions of twisting the wrists are opposite, it is clear that the increase and decrease in the rotation value also becomes opposite. Moreover, with reference to FIGS. 7 and 8, the explanation is given about the case in which the right hand is the non-axis hand. However, if the left hand is the non-axis hand; then, because of the opposite directions of twisting the wrists of the right hand than the left hand, the increase and decrease in the rotation value also becomes opposite. More particularly, when the right hand is twisted in the clockwise direction from the overhand grip, the handgrip changes to the underhand grip. On the other hand, when the right hand is twisted in the counterclockwise direction from the overhand grip, the handgrip changes to the el-grip. In contrast, when the left hand is twisted in the clockwise direction from the el-grip, the handgrip changes to the underhand grip. On the other hand, when the left hand is twisted in the counterclockwise direction from the overhand grip, the handgrip changes to the underhand grip. According to such characteristics, based on the increase and decrease in the rotation value of the non-axis hand of the performer 3, it becomes possible to determine whether or not the el-grip represents the handgrip.

Meanwhile, with reference to FIGS. 7 and 8, the explanation is given about the example in which the rotation values of the upper arm and the forearm are used. However, that is only exemplary. Alternatively, at least either the rotation value of the upper arm or the rotation value of the forearm can be used.

As another example of a specialized algorithm, the explanation is given about an example of calculating a second-type feature quantity "handgrip" that is the determining factor in differentiating among the candidate elements of a second series having different levels of difficulty depending on the presence or absence of a specific movement in the previous element and depending on whether or not the grip was changed after that specific movement. Only as an example of a combination of such candidate elements, the candidate element 1 indicating "giant swing forward" and the candidate element 2 indicating "el-grip giant swing", which are included in the tentative elements identified by the tentative element ID "003" illustrated in FIG. 5, can be cited. However, that is not the only possible case, and a large number of combinations of candidate elements including following combinations (1) and (2) are available in the second series.
(1) "Endo" and "Endo el-grip"
(2) "Endo 1/1 to mixed grip" and "Endo 1/1 to mixed grip handstand"

In the candidate elements belonging to the second series, under constraint conditions (a) and (b) given below, logics (c) and (d) given below are established.
(a) excluding the grip, the movements are identical
(b) it is not simple to change the grip to the el-grip, and the change needs to be accompanied by a specific movement
(c) as examples of the specific movement, an Adler element or a handstand twist can be cited
(d) if the specific movement is not performed immediately before a movement corresponding to a candidate element, then it can be determined that the el-grip is not implemented; and, even when the specific movement is performed, if the hands are released and the grip is changed before the completion of the movement considered to be the candidate element, it can be determined that the el-grip is not implemented.

Based on such logics, a special algorithm explained below is built. More specifically, the second calculating unit 15E determines whether or not the previous element was an Adler element, for example, determines whether or not the most recent element recognition result, from among the element recognition results obtained after performing the second-type element recognition, indicates an Adler element. If the previous element was not an Adler element, then the second calculating unit 15E determines whether or not the previous element was a handstand twist. If the previous element was a handstand twist, then the second calculating unit 15E determines whether or not the "el-grip" represents the handgrip based on the second-type feature quantities used in the second-type element recognition of the previous element. If the "el-grip" represents the handgrip, then the second calculating unit 15E determines whether or not the grip was changed midway to the completion of the element being recognized. For example, the second calculating unit 15E determines whether or not there is a timing at which the distance between the joint positions of the wrists and the position of the horizontal bar is equal to or greater than a threshold value.

Herein, if the previous element was either an Adler element or a handstand twist with the el-grip and if there was no change in the grip midway of the element, then the second calculating unit 15E calculates "el-grip" to be the handgrip for the second-type feature quantities. On the other hand, if the previous element was either an Adler element or a handstand twist with the el-grip but if there was a change in the grip midway of the element, or if the previous element was a handstand twist without the el-grip; then the second calculating unit 15E calculates "other than el-grip" to be the handgrip for the second-type feature quantities.

As a further example of a specialized algorithm, the explanation is given about an example of calculating a second-type feature quantity "handgrip" that is the determining factor in differentiating among the candidate elements of a third series for which it is difficult to establish a logic such as condition determination for calculating the second-type feature quantities with accuracy. Only as examples of combinations of such candidate elements; a combination of "giant back swing" and "normal giant swing", a combination of "Russian giant swing" and "giant swing forward", and a combination of "Czech giant swing" and "giant swing backward" can be cited.

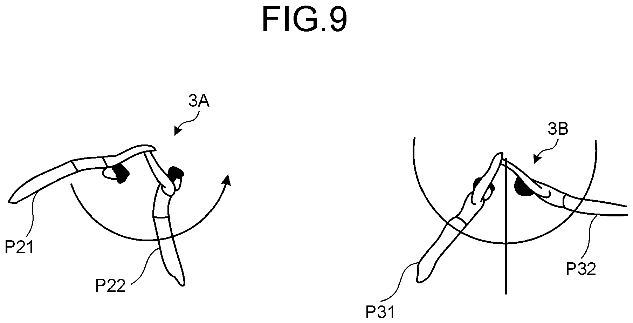

FIG. 9 is a schematic diagram illustrating an example of "giant back swing" and "giant swing". In FIG. 9, postures P21 and P22 of a performer 3A exhibiting "giant back swing" and postures P31 and P32 of a performer 3B exhibiting "normal giant swing" are arranged side by side. When the postures P21 and P22 of the performer 3A are compared with the postures P31 and P32 of the performer 3B, as illustrated in FIG. 9, the shape of the shoulders is different between the performers 3A and 3B. However, there are individual differences in the shape of the shoulders. Hence, just by comparing the angles of the arms with a threshold value, it is difficult to accurately differentiate between the elements.

In that case, only as an example, a specialized algorithm can be implemented that makes use of a machine learning model which treats the skeletal frame information or the time-series data of the skeletal frame information as the input, and which outputs the class corresponding to the values of the second-type feature quantities, such as outputs the opening and closing of the arms. In the training of such a machine learning model, the skeletal frame information assigned with the correct solution label of the opening and closing of the arms is used as the training data. For example, in the learning phase, the skeletal frame information can be treated as the explanatory variable of the machine learning model; the label can be treated as the objective variable of the machine learning model; and the training of the machine learning model can be done according to an arbitrary machine learning algorithm such as deep learning. As a result, an already-trained machine learning model is obtained. In the inference phase, the skeletal frame information obtained as the fitting result is input to the already-input machine learning model. With the input of the skeletal frame information, the machine learning model outputs the class corresponding to the opening and closing of the arms.

If the range of the training data or the input data, which is input to the machine learning model, is narrowed down to the skeletal frame information corresponding to the element candidates of the third series that are narrowed down in the first-type element recognition; then it becomes possible to achieve sophistication of the second-type feature quantities. Herein, the explanation is given about implementing a specialized algorithm in which a machine learning model is used with respect to the candidate elements belonging to the third series. Similarly, a specialized algorithm in which a machine learning model is used can be implemented also with respect to the candidate elements belonging to the first series or the second series. In that case, the labels representing the objective variables of the machine learning model can be replaced with the second-type feature quantities corresponding to the first series or the second series, and the specialized algorithm can be implemented with ease.

The second recognizing unit 15F is a processing unit that performs the second-type element recognition. Only as an example, in the second-type element recognition too, the element recognition technology disclosed in International Publication Pamphlet No. WO 2019/116495 can be used.

As an illustrative embodiment, the second recognizing unit 15F can perform the second-type element recognition using the tentative-element recognition result of the first-type element recognition and using the second-type feature quantities calculated by the second calculating unit 15E. However, that does not block the use of the time-series data of the skeletal frame information and the first-type feature quantities in the second-type element recognition. At the time of performing the second-type element recognition, the operations overlapping with the first-type element recognition can be skipped. For example, the division of the time-series data of the 3D skeletal frame information and the recognition of the basic movements can be skipped. In that case, from among the basic elements defined in the element dictionary data 13B, the second recognizing unit 15F treats, as the target elements, the basic elements of such elements which correspond to the candidate elements narrowed down in the first-type element recognition; and, from among the target elements, recognizes the basic elements corresponding to which the second-type feature quantities calculated by the second calculating unit 15E. Then, the second recognizing unit 15F collates the time-series pattern of the basic elements obtained as the recognition result with the time-series pattern registered in the element dictionary data 13B; and recognizes the elements that, from among the candidate elements narrowed down in the first-type element recognition, are actually exhibited by the performer 3.

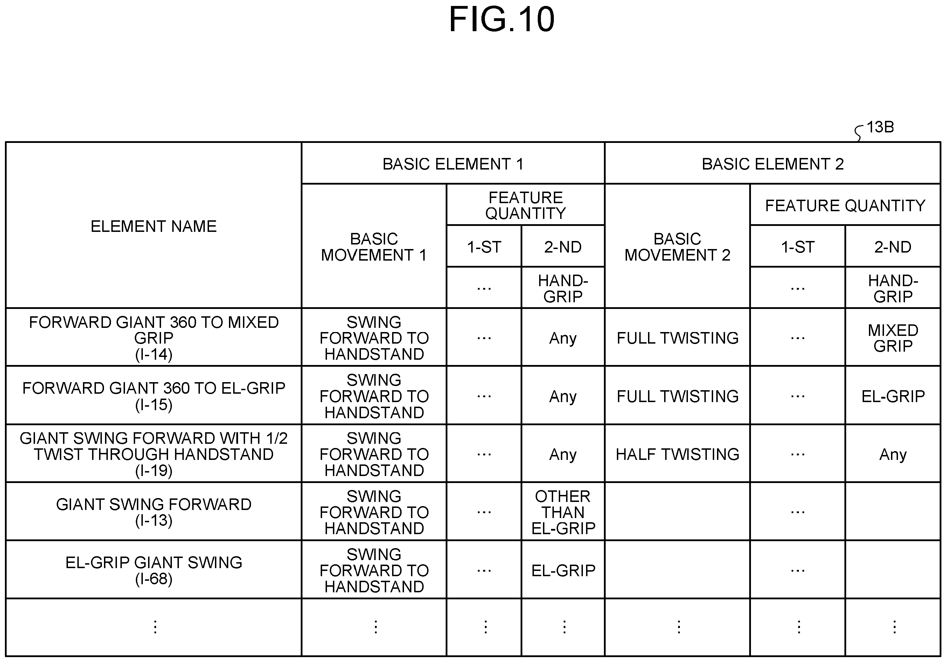

FIG. 10 is a diagram illustrating an example of the element dictionary data 13B. In FIG. 10, only as an example, the element dictionary data 13B related to the gymnastic event "horizontal bar" is illustrated. As illustrated in FIG. 10, in the element dictionary data 13B, such data can be used in which the time-series pattern of the basic elements is associated on an element-by-element basis. Moreover, in the basic elements, the basic movements and the feature quantities can be included.

For example, consider an example in which, as a result of performing the first-type element recognition, the elements are narrowed down to two elements, namely, the candidate element 1 indicating "forward giant 360 to mixed grip" and the candidate element 2 indicating "forward giant 360 to el-grip". In that case, if the second-type feature quantity of the handgrip indicates "other than el-grip"; then, in the second-type element recognition, the element name "forward giant 360 to mixed grip" is recognized. On the other hand, if the second-type feature quantity of the handgrip indicates "el-grip"; then, in the second-type recognition, the element name "forward giant 360 to el-grip" is recognized.

Moreover, consider an example in which, as a result of performing the first-type element recognition, the elements are narrowed down to two elements, namely, the candidate element 1 indicating "giant swing forward" and the candidate element 2 indicating "el-grip giant swing" belonging to the second series. In that case, if the second-type feature quantity of the handgrip indicates "other than el-grip"; then, in the second-type element recognition, the element name "giant swing forward" is recognized. On the other hand, if the second-type feature quantity of the handgrip indicates "el-grip"; then, in the second-type recognition, the element name "el-grip giant swing" is recognized.

Furthermore, consider an example in which, as a result of performing the first-type element recognition, the elements are narrowed down to two elements, namely, the candidate element 1 indicating "giant back swing" and the candidate element 2 indicating "normal giant swing" belonging to the second series. In that case, if the second-type feature quantity of the arm indicates "open"; then, in the second-type element recognition, the element name "giant back swing" is recognized. On the other hand, when the second-type feature quantity of the arm indicates "closed"; then, in the second-type element recognition, the element name "giant swing forward" is recognized.

The element recognition result obtained as a result of performing the second-type element recognition can be output to the following destinations. For example, the element recognition result can be output to the automatic scoring function that performs calculation of the elements of the performer 3 and the scoring of the performance, such as the D score and the E score, and to the backend functions and services such as the scoring support, training, and entertainment contents.

### <Flow of operations>

Given below is the explanation of (1) element recognition operation performed in the element recognition device 10 according to the first embodiment. Moreover, as examples of the specialized algorithm used in calculating second-type feature quantities at Step S105 of the element recognition operation, the explanation is given with reference to (2) the specialized algorithm implemented in the first series and (3) the specialized algorithm of the second series as implemented in the second series.

### (1) Element recognition operation

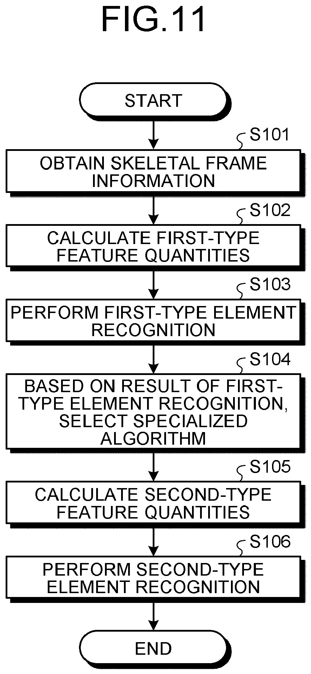

FIG. 11 is a flowchart for explaining a sequence of the element recognition operation. Only as an example, the element recognition operation can be performed in an iterative manner as long as there is a continuous output of the skeletal frame information from the skeletal frame detection device 7. Meanwhile, the element recognition operation can be a real-time operation in which the skeletal frame information is obtained in units of frames, or can be a batch operation in which the time-series data of the skeletal frame information stored over a certain period of time or over a specific frame count is obtained collectively.

As illustrated in FIG. 11, when the obtaining unit 15A obtains the skeletal frame information (Step S101), the first calculating unit 15B calculates the first-type feature quantities to be used in the first-type element recognition for narrowing down the elements of the concerned gymnastic event (Step S102).

Then, the first recognizing unit 15C refers to the skeletal frame information obtained at Step S101 and refers to the first-type feature quantities calculated at Step S102, and performs the first-type element recognition for narrowing down the candidate elements regarding the elements actually exhibited by the performer 3 from among all elements of the concerned gymnastic event (Step S103).

Subsequently, the selecting unit 15D selects the specialized algorithm that is specialized in recognizing the elements narrowed down at Step S103 (Step S104). Then, the second calculating unit 15E follows the specialized algorithm selected at Step S104, and calculates the second-type feature quantities that are the determining factors in determining the actually-exhibited elements from among the candidate elements narrowed down in the first-type element recognition (Step S105).

Subsequently, the second recognizing unit 15F uses the tentative-element recognition result obtained at Step S103 and the second-type feature quantities calculated at Step S105, and performs the second-type element recognition for recognizing the elements actually exhibited by the performer 3 from among the elements narrowed down in the first-type element recognition (Step S106) .

### (2) Specialized algorithm of first series

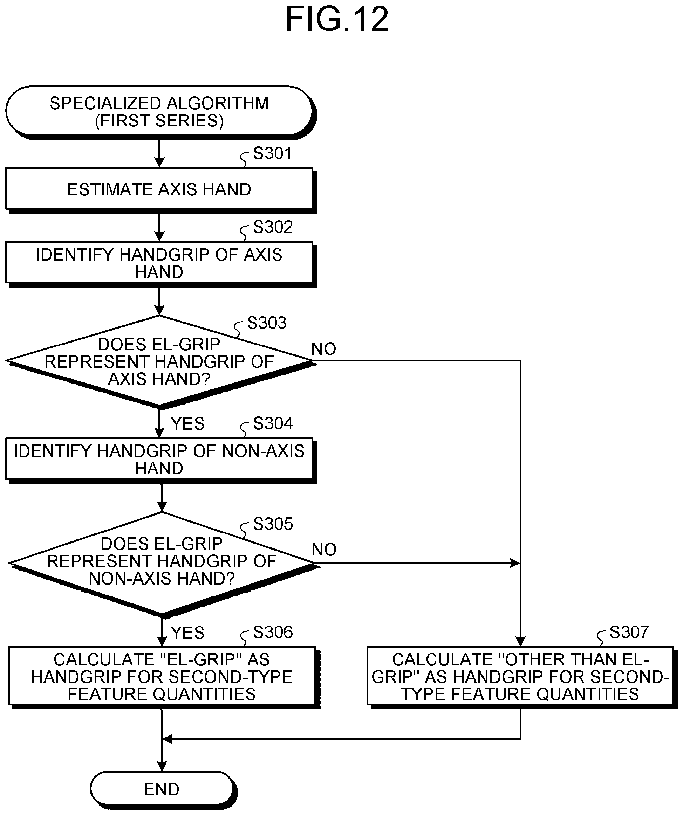

FIG. 12 is a diagram illustrating an example of the specialized algorithm of the first series. This operation corresponds to the operation performed at Step S105 illustrated in FIG. 11 and, for example, is initiated when the specialized algorithm of the first series is selected at Step S104.

As illustrated in FIG. 12, the second calculating unit 15E identifies the axis hand of the performer 3 (Step S301). For example, the hand for which the distance between the joint position of the wrist and the position of the horizontal bar is shorter can be estimated to be the "axis hand".

Subsequently, based on a specific type of feature quantity from among the first-type feature quantities recognized as the basic movement "full twisting" during the first-type element recognition, for example, based on the direction of rotation and the amount of rotation of the body; the second calculating unit 15E estimates the handgrip of the axis hand of the performer 3 (Step S302).

At that time, if "el-grip" represents the handgrip of the axis hand of the performer 3 (Yes at Step S303), then the second calculating unit 15E performs the following operations. That is, based on the rotation information of the arm used in the fitting during skeletal frame detection of the section in which the distance between the wrist of the non-axis hand of the performer 3 and the horizontal bar is equal to or greater than the threshold value, the second calculating unit 15E estimates the handgrip of the non-axis hand (Step S304).

Herein, when el-grip represents the handgrip of the non-axis hand (Yes at Step S305), the second calculating unit 15E calculates "el-grip" as the handgrip for the second-type feature quantities (Step S306). On the other hand, when "el-grip" represents the handgrip of the axis hand of the performer 3 or when "el-grip" does not represent the handgrip of the non-axis hand of the performer 3 (No at Step S303 or No at Step S305), the second calculating unit 15E calculates "other than el-grip" as the handgrip for the second-type feature quantities (Step S307).

### (3) Specialized algorithm of second series

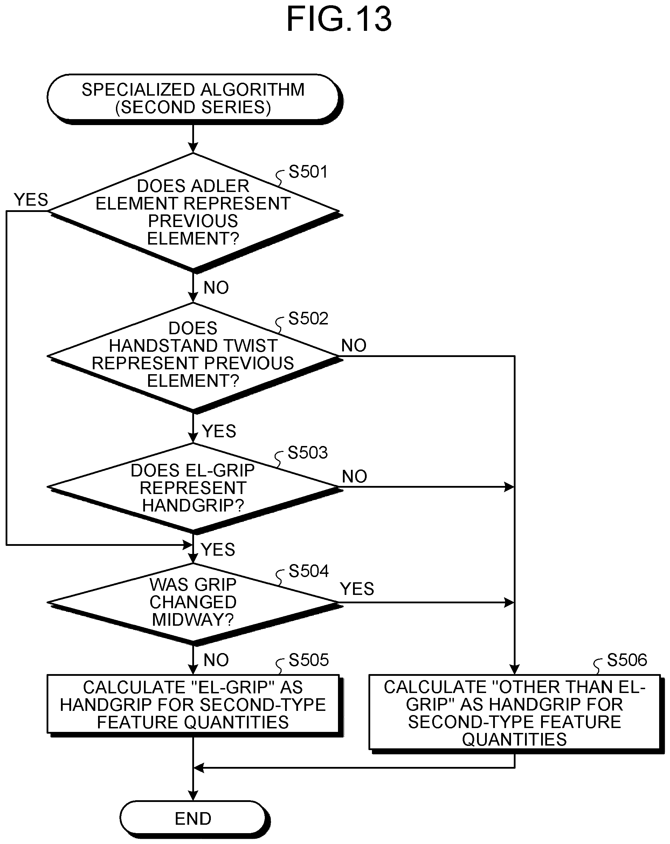

FIG. 13 is a diagram illustrating an example of the specialized algorithm of the second series. This operation corresponds to the operation performed at Step S105 illustrated in FIG. 11 and, for example, is initiated when the specialized algorithm of the second series is selected at Step S104.

As illustrated in FIG. 13, the second calculating unit 15E determines whether or not the previous element was an Adler element, for example, determines whether or not the most recent element recognition result, from among the element recognition results obtained after performing the second-type element recognition, indicates an Adler element (Step S501). If the previous element was an Adler element (Yes at Step S501), then the system control proceeds to Step S504.

On the other hand, if the previous element was not an Adler element (No at Step S501), then the second calculating unit 15E determines whether or not the previous element was a handstand twist (Step S502). If the previous element was a handstand twist (Yes at Step S502); then, based on the second-type feature quantities used in the second-type element recognition of the previous element, the second calculating unit 15E further determines whether or not "el-grip" represents the handgrip (Step S503) .

If "el-grip" represents the handgrip (Yes at Step S503), then the second calculating unit 15E performs the following operations. That is, the second calculating unit 15E determines whether or not the grip was changed midway to the completion of the element being recognized. For example, the second calculating unit 15E determines whether or not there is a timing at which the distance between the joint positions of the wrists and the position of the horizontal bar is equal to or greater than a threshold value (Step S504).

Herein, if the previous element either was an Adler element or was a handstand twist with the el-grip and if that element was not changed midway (No at Step S504), then the second calculating unit 15E calculates "el-grip" as the handgrip for the second-type feature quantities (Step S505).

On the other hand, if the previous element was an Adler element or a handstand twist with the el-grip but if that element was changed midway, or if the previous element was not an Adler element or a handstand twist, or if the previous element was an Adler element or a handstand twist but the handgrip was not the el-grip; then the second calculating unit 15E calculates "other than el-grip" as the handgrip of the second-type feature quantity (Step S506). Thus, the operation at Step S506 is performed when one of the following conditions is satisfied: No at Step S502, No at Step S503, and Yes at Step S504.

### <Aspect of effects>

As explained above, in the element recognition device 10 according to the first embodiment, based on the skeletal frame information obtained as a result of performing skeletal frame detection, the elements included in the element dictionary are narrowed down; and a specialized algorithm that is specialized in recognizing the narrowed-down elements is selected, and the elements that, from among the narrowed-down elements, were exhibited are recognized. Thus, in the element recognition device 10 according to the first embodiment, it becomes possible to achieve enhancement in the accuracy of the element recognition. In turn, it becomes possible to achieve enhancement in the accuracy of the backend functions or services such as automatic scoring, scoring support, training, and entertainment contents.

### [Second embodiment]

Till now, the description was given about an embodiment of the device disclosed herein. However, apart from the embodiment described above, the present invention can be implemented in various other forms too. Given below is the description of other embodiments of the present invention.

### <Omission of calculation of second-type feature quantities>

In the first embodiment described above, as an example of the specialized algorithm, the second-type feature quantities meant for differentiating among the candidate elements are calculated with accuracy, and then the second-type element recognition is performed. However, the second-type feature quantities need not always be calculated. For example, the second-type element recognition can be performed by skipping the calculation of the second-type feature quantities.

For example, as an example of the candidate elements belonging to the first series, consider an example in which the elements are narrowed down to the tentative elements identified by the tentative element ID "001", that is, the candidate element 1 indicating "forward giant 360 to mixed grip" and the candidate element 2 indicating "forward giant 360 to el-grip". In that case, when the condition "Yes at Step S305" illustrated in FIG. 12 is satisfied, the second recognizing unit 15F recognizes that the element "forward giant 360 to el-grip" was actually exhibited by the performer 3 from among the candidate elements narrowed down in the first-type element recognition. On the other hand, when the condition "No at Step S303" or "No at Step S305" is satisfied, the second recognizing unit 15F recognizes that the element "forward giant 360 to mixed grip" was actually exhibited by the performer 3 from among the candidate elements narrowed down in the first-type element recognition. In this way, the calculation of the second-type feature quantities can be skipped.

Moreover, as an example of the candidate elements belonging to the second series, consider an example in which the elements are narrowed down to the tentative elements identified by the tentative element ID "003", that is, the candidate element 1 indicating "giant swing forward" and the candidate element 2 indicating "el-grip giant swing". In that case, when the condition "Yes at Step S501" or "No at Step S504" illustrated in FIG. 13 is satisfied, the second recognizing unit 15F recognizes that the element "el-grip giant swing" was actually exhibited by the performer 3 from among the candidate elements narrowed down in the first-type element recognition. On the other hand, when the condition "No at Step S502", or "No at Step S503", or "Yes at Step S504" is satisfied, the second recognizing unit 15F recognizes that the element "giant swing forward" was actually exhibited by the performer 3 from among the candidate elements narrowed down in the first-type element recognition. In this way, the calculation of the second-type feature quantities can be skipped.

Furthermore, as an example of the candidate elements belonging to the third series, consider an example in which the elements are narrowed down to the elements "giant back swing" and "normal giant swing". In that case, a machine learning model is used that treats the skeletal frame information or the time-series data of the skeletal frame information as the input, and outputs the class corresponding to each element name, such as "giant back swing" or "normal giant swing". In the training of such a machine learning model, the skeletal frame information assigned with the correct solution label of "giant back swing" or "normal giant swing" is used as the training data. For example, in the learning phase, the skeletal frame information can be treated as the explanatory variable of the machine learning model; the label can be treated as the objective variable of the machine learning model; and the training of the machine learning model can be done according to an arbitrary machine learning algorithm such as deep learning. As a result, an already-trained machine learning model is obtained. In the inference phase, the skeletal frame information obtained as the fitting result is input to the already-input machine learning model. With the input of the skeletal frame information, the machine learning model outputs the class corresponding to "giant back swing" or "normal giant swing". In this way, the calculation of the second-type feature quantities can be skipped.

Meanwhile, herein, the explanation is given about an example of implementing a specialized algorithm, in which a machine learning model is used, with respect to the candidate elements belonging to the third series. Similarly, a specialized algorithm, in which a machine learning model is used, can be implemented also with respect to the candidate elements belonging to the first series or the second series. In that case, the labels representing the objective variables of the machine learning model can be replaced with the element names of the candidate elements corresponding to the first series or the second series, and the specialized algorithm can be implemented with ease.

### <Separation and integration>

The constituent elements of the device illustrated in the drawings are merely conceptual, and need not be physically configured as illustrated. The constituent elements, as a whole or in part, can be separated or integrated either functionally or physically based on various types of loads or use conditions. For example, any of the obtaining unit 15A, the first calculating unit 15B, the first recognizing unit 15C, the selecting unit 15D, the second calculating unit 15E, and the second recognizing unit 15F can be configured as external devices of the element recognition device 10 and can be connected via a network. Alternatively, the obtaining unit 15A, the first calculating unit 15B, the first recognizing unit 15C, the selecting unit 15D, the second calculating unit 15E, and the second recognizing unit 15F can be included in separate devices connected via a network, and the functions of the element recognition device 10 can be implemented as a result of cooperation among those devices. Moreover, regarding the tentative-element dictionary data 13A or the element dictionary data 13B stored in the memory unit 13, some or all of the data can be stored in different devices connected via a network, and the functions of the element recognition device 10 can be implemented as a result of cooperation among those devices.

### [Element recognition program]

The various operations explained in the embodiments described above can be implemented by causing a computer such as a personal computer or a workstation to execute programs that are written in advance. Explained below with reference to FIG. 13 is an exemplary computer that executes an element recognition program having identical functions to the first and second embodiments.

FIG. 13 is a diagram illustrating an exemplary hardware configuration. As illustrated in FIG. 13, a computer 100 includes an operating unit 110a, a speaker 110b, a camera 110c, a display 120, and a communication unit 130. Moreover, the computer 100 includes a CPU 150, a ROM 160, an HDD 170, and a RAM 180. The constituent elements 110 to 180 are connected to each other by a bus 140.

As illustrated in FIG. 13, the HDD 170 is used to store an element recognition program 170a that enables implementation of functions identical to the obtaining unit 15A, the first calculating unit 15B, the first recognizing unit 15C, the selecting unit 15D, the second calculating unit 15E, and the second recognizing unit 15F according to the first embodiment. The element recognition program 170a can be kept in an integrated form or a dispersed form in an identical manner to the obtaining unit 15A, the first calculating unit 15B, the first recognizing unit 15C, the selecting unit 15D, the second calculating unit 15E, and the second recognizing unit 15F illustrated in FIG. 4. In other words, the HDD 170 need not store therein all of the data illustrated in the first embodiment described above, and only the data used for the processes may be stored in the HDD 170.

In such an environment, the CPU 150 reads the element recognition program 170a from the HDD 170 and loads it in the RAM 180. As a result, the element recognition program 170a becomes able to function as an element recognition process 180a as illustrated in FIG. 13. The element recognition process 180a loads a variety of data, which is read from the HDD 170, in a memory area assigned to the element recognition process 180a from among the memory areas provided in the RAM 180; and implements various operations using the variety of loaded data. For example, examples of the operations implemented by the element recognition process 180a include the operations explained with reference to FIGS. 11 to 13. In the CPU 150, all of the processing units illustrated in the first embodiment described above need not operate, and processing units that correspond to processes to be executed may be virtually achieved.

The element recognition program 170a is not always stored in the HDD 170 or the ROM 160 from the beginning. For example, programs can be stored in a "portable physical medium" such as a flexible disk (FD), a CD-ROM, a DVD, a magneto-optical disk, or an IC card that is insertable in the computer 100. Then, the computer 100 can obtain the programs from the portable physical medium and execute them. Still alternatively, programs can be stored in another computer or a server device connected to the computer 100 via a public line, the Internet, a LAN, or a WAN. Then, the computer can obtain the programs and execute them. Reference Signs List

- 1: gymnastics scoring support system
- 3: performer
- 5: 3D laser sensor
- 7: skeletal frame detection device
- 10: element recognition device
- 11: communication interface unit
- 13: memory unit
- 13A: tentative-element dictionary data
- 13B: element dictionary data
- 15: control unit
- 15A: obtaining unit
- 15B: first calculating unit
- 15C: first recognizing unit
- 15D: selecting unit
- 15E: second calculating unit
- 15F: second recognizing unit

## Claims

1. An element recognition method carried out by a computer, comprising:
obtaining skeletal frame information obtained as a result of performing skeletal frame detection;
performing first-type element recognition in which, from among elements included in a gymnastic event, some elements are narrowed down based on the skeletal frame information; and
performing second-type element recognition in which, according to a specialized algorithm that is specialized in recognizing the some elements narrowed down in the first-type element recognition, an element which was exhibited from among the some elements is recognized.

2. The element recognition method according to claim 1, wherein
the first-type element recognition includes narrowing down the some elements based on a first-type feature quantity for which calculation accuracy is equal to or greater than a first threshold value from among feature quantities related to elements included in the gymnastic event, and
the second-type element recognition includes calculating a second-type feature quantity which, according to the specialized algorithm, differentiates among the some elements narrowed down in the first-type element recognition and recognizing an element which was exhibited from among the some elements based on the calculated second-type feature quantity.

3. The element recognition method according to claim 2, wherein the second-type element recognition includes calculating handgrip as the second-type feature quantity based on the skeletal frame information and based on rotation information that corresponds to time of bending of elbows and that is used in detecting the skeletal frame information.

4. The element recognition method according to claim 2, wherein the second-type element recognition includes calculating handgrip as the second-type feature quantity based on presence or absence of a specific movement in an element obtained as most recent element recognition result from among element recognition results obtained after performing the second-type element recognition and based on presence or absence of change of grip after the specific movement.

5. The element recognition method according to claim 2, wherein the second-type element recognition includes calculating the second-type feature quantity by inputting the skeletal frame information to a machine learning model in which machine learning is performed by treating skeletal frame information as explanatory variable and by treating, as objective variable, label of a second-type feature quantity meant for differentiating among some elements narrowed down in the first-type element recognition.

6. The element recognition method according to claim 1, wherein the second-type element recognition includes recognizing an element which was exhibited from among the some elements by inputting the skeletal frame information to a machine learning model in which machine learning is performed by treating skeletal frame information as explanatory variable and by treating, as objective variable, labels of names of some elements narrowed down in the first-type element recognition.

7. An element recognition device comprising:
a control unit configured to execute
obtaining skeletal frame information obtained as a result of performing skeletal frame detection;
performing first-type element recognition in which, from among elements included in a gymnastic event, some elements are narrowed down based on the skeletal frame information; and
performing second-type element recognition in which, according to a specialized algorithm that is specialized in recognizing the some elements narrowed down in the first-type element recognition, an element which was exhibited from among the some elements is recognized.

8. The element recognition device according to claim 7, wherein
the first-type element recognition includes narrowing down the some elements based on a first-type feature quantity for which calculation accuracy is equal to or greater than a first threshold value from among feature quantities related to elements included in the gymnastic event, and
the second-type element recognition includes calculating a second-type feature quantity which, according to the specialized algorithm, differentiates among the some elements narrowed down in the first-type element recognition and recognizing an element which was exhibited from among the some elements based on the calculated second-type feature quantity.

9. The element recognition device according to claim 8, wherein the second-type element recognition includes calculating handgrip as the second-type feature quantity based on the skeletal frame information and based on rotation information that corresponds to time of bending of elbows and that is used in detecting the skeletal frame information.

10. The element recognition device according to claim 8, wherein the second-type element recognition includes calculating handgrip as the second-type feature quantity based on presence or absence of a specific movement in an element obtained as most recent element recognition result from among element recognition results obtained after performing the second-type element recognition and based on presence or absence of change of grip after the specific movement.

11. The element recognition device according to claim 8, wherein the second-type element recognition includes calculating the second-type feature quantity by inputting the skeletal frame information to a machine learning model in which machine learning is performed by treating skeletal frame information as explanatory variable and by treating, as objective variable, label of a second-type feature quantity meant for differentiating among some elements narrowed down in the first-type element recognition.

12. The element recognition device according to claim 7, wherein the second-type element recognition includes recognizing an element which was exhibited from among the some elements by inputting the skeletal frame information to a machine learning model in which machine learning is performed by treating skeletal frame information as explanatory variable and by treating, as objective variable, labels of names of some elements narrowed down in the first-type element recognition.

13. A gymnastics scoring support system comprising:
a sensor device that obtains a depth image; and
an element recognition device that includes
a skeletal frame detecting unit configured to perform skeletal frame detection with respect to the depth image,
an obtaining unit configured to obtain skeletal frame information obtained as a result of performing the skeletal frame detection,
a first recognizing unit configured to perform first-type element recognition in which, from among elements included in a gymnastic event, some elements are narrowed down based on the skeletal frame information,
a second recognizing unit configured to perform second-type element recognition in which, according to a specialized algorithm that is specialized in recognizing the some elements narrowed down in the first-type element recognition, an element which was exhibited from among the some elements is recognized, and
a scoring unit configured to produce a score for the element obtained as a result of performing the second-type element recognition.
